(19) Europäisches Patentamt
European Patent Office
Office européen des brevets

(11) **EP 2 764 059 B1**

## (12) EUROPÄISCHE PATENTSCHRIFT

(45) Veröffentlichungstag und Bekanntmachung des Hinweises auf die Patenterteilung:
**01.02.2017 Patentblatt 2017/05**

(21) Anmeldenummer: **12773197.4**

(22) Anmeldetag: **04.10.2012**

(51) Int Cl.:
*C09C 1/32* (2006.01)      *C01B 39/50* (2006.01)
*C01B 39/52* (2006.01)

(86) Internationale Anmeldenummer:
**PCT/DE2012/100311**

(87) Internationale Veröffentlichungsnummer:
**WO 2013/050030 (11.04.2013 Gazette 2013/15)**

(54) **VERFAHREN ZUR HYDROTHERMALEN SYNTHESE EINES SCHWEFELHALTIGEN ALUMOSILIKATES IN KRISTALLINER SODALITHSTRUKTUR SOWIE SCHWEFELHALTIGES ALUMOSILIKAT UND DESSEN VERWENDUNG**

METHOD FOR HYDROTHERMAL SYNTHESIS OF A SULFUR-CONTAINING ALUMINOSILICATE WITH A CRYSTALLINE SODALITE STRUCTURE, AND SULFUR-CONTAINING ALUMINOSILICATE AND USE THEREOF

PROCÉDÉ POUR LA SYNTHÈSE HYDROTHERMALE D'UN ALUMINOSILICATE CONTENANT DU SOUFRE DANS UNE STRUCTURE CRISTALLINE DE SODALITE AINSI QU'ALUMINOSILICATE CONTENANT DU SOUFRE ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.10.2011 DE 102011054170**

(43) Veröffentlichungstag der Anmeldung:
**13.08.2014 Patentblatt 2014/33**

(73) Patentinhaber: **Fraunhofer Gesellschaft zur Förderung der angewandten Forschung e.V.
80686 München (DE)**

(72) Erfinder:
• **RICHTER, Hannes**
  **07629 Hermsdorf (DE)**
• **LENKE, Norbert**
  **07747 Jena (DE)**
• **VOIGT, Ingolf**
  **07743 Jena (DE)**

(74) Vertreter: **Oehmke, Volker et al
Patentanwälte Oehmke & Kollegen
Neugasse 13
07743 Jena (DE)**

(56) Entgegenhaltungen:
• **WILLIAMS ET AL: "Synthetic Photochromic Sodalite", JOURNAL OF THE AMERICAN CERAMIC SOCIETY, Bd. 52, Nr. 3, 1. Januar 1969 (1969-01-01) , Seiten 139-145, XP002690846,**
• **BRENCHLEY, M.E., WELLER, M.T: "Synthesis and Structure of Sulfide Aluminate Sodalites", J. MATER.CHEM, Bd. 2, Nr. 10, 1. Januar 1992 (1992-01-01) , Seiten 1003-1005, XP002690847,**
• **KOWALAK ET AL: "Sulfur radicals embedded in various cages of ultramarine analogs prepared from zeolites", JOURNAL OF SOLID STATE CHEMISTRY, ORLANDO, FL, US, Bd. 180, Nr. 3, 17. März 2007 (2007-03-17) , Seiten 1119-1124, XP005927202, ISSN: 0022-4596, DOI: 10.1016/J.JSSC.2007.01.004**
• **KHAJAVI ET AL: "Synthesis of thin defect-free hydroxy sodalite membranes: New candidate for activated water permeation", JOURNAL OF MEMBRANE SCIENCE, ELSEVIER SCIENTIFIC PUBL.COMPANY. AMSTERDAM, NL, Bd. 299, Nr. 1-2, 22. Juni 2007 (2007-06-22), Seiten 63-72, XP022130730, ISSN: 0376-7388, DOI: 10.1016/J.MEMSCI.2007.04.027**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung eines mikroporösen Materials in Form eines schwefelhaltigen Alumosilikates in kristalliner Sodalithstruktur. Die Erfindung betrifft ferner ein schwefelhaltiges Alumosilikat und dessen Verwendung. Zeolithe sind offenporöse, kristalline Alumosilikate. Mit ihrer definierten Porengröße im Bereich < 1 nm sind sie in Lage, größenselektiv Gase aufzunehmen. Diese Eigenschaft wird großtechnisch zur adsorptiven Gastrennung eingesetzt. Dabei werden Zeolithe zu Formkörpern verarbeitet und als lose Schüttung in Kolonnen verwendet. Die zu trennenden Gase durchströmen die Schüttung, wobei die Gaskomponente, die in das Porensystem des Zeoliths eindringen kann, adsorbiert wird, wodurch die nicht adsorbierenden Gaskomponenten angereichert werden. Ist die Adsorptionskapazität des Zeolithes erschöpft, kann über Temperaturerhöhung und/oder Druckabsenkung die adsorbierte Komponente desorbiert und rein gewonnen werden. Eine Alternative stellt die Verarbeitung der Zeolithe als Membran dar. Dabei werden die Zeolithe als dünne, geschlossene Schicht auf einem porösen Träger abgeschieden. Komponenten eines Gasgemisches, die in die Poren des Zeolithes eindringen, können bei Anlegen eines Konzentrations-, Aktivitäts- oder Partialdruckgradienten kontinuierlich durch die Zeolithmembran permeieren, wodurch die zurückgehaltene Komponente angereichert wird. Dadurch ist eine kontinuierliche Gastrennung durch ein größenselektives Sieben möglich.

Bei größenselektiver Gastrennung durch Adsorption oder Membrantechnik können zwei oder mehrerer Gaskomponente nur separiert werden, wenn die Porengröße des Zeolithen zwischen den mittleren Molekülgrößen der zu trennenden Komponenten liegt. Die Abtrennung von kleinen Molekülen, wie Wasser, Wasserstoff oder Helium von nur wenig größeren Molekülen, wie z. B. Stickstoff, Sauerstoff, Kohlenmonoxid, Kohlendioxid bedarf daher Poren zwischen 0,25 nm und 0,30 nm. Diese Eigenschaft wird nahezu ausschließlich von Zeolithen mit Sodalithstruktur (SOD) erfüllt. Dessen 6-Ring-Öffnung hat einen mittleren Porendurchmesser von 0,28 nm. Die Richtigkeit der These konnte durch X. Xu et al.: "Microwave-assisted hydrothermal synthesis of hydroxy-sodalite zeolite membrane"; Microporous and Mesoporous Materials 75 (2004) 173 - 181, bewiesen werden, der erstmalig über eine mikrowellenunterstützte Synthese einer dünnen, geschlossenen Hydroxysodalith-Schicht auf einem porösen keramischen Träger herstellen konnte, durch welche eine mehr als 1.000 mal höhere Permeation für Wasserstoff als für n-Butan gemessen wurde. Khajavi stellte über eine klassisch beheizte, hydrothermale Synthese Membranen für die Wasserabtrennung her (S. Khajavi et al.: "Synthesis of thin defect-free hydroxy sodalite membranes: New candidate for activated water permeation"; Journal of Membrane Science 299 (2007) 63 - 72; "Performance of hydroxy sodalite membranes as absolute water selective materials under acidic and basic conditions", Journal of Membrane Science 356 (2010) 1 - 6; "Fischer-Tropsch synthesis with in situ H2O removal - Directions of membrane development", Microporous and Mesoporous Materials 115 (2008) 123 - 136). Im Hydroxysodalith sind $SiO_4^{4-}$ und $AlO_4^{4-}$-Tetraeder über gemeinsame Sauerstofatome verknüpft. Die Dreiwertigkeit des Aluminiums wird durch den Einbau von zusätzlichen Kationen, wie Alkali- und Erdalkaliionen, die sich überwiegend um ein zentrales Hydroxidion gruppieren, ausgeglichen. Eine thermische Behandlung führt ab > 400°C und bei Anwesenheit von Wasser bereits ab > 200°C zu einer Herauslösung des zentralen Hydroxidions und der zusätzlich eingebauten Kationen und damit zur Zerstörung der SOD-Struktur. Dadurch wird der technische Einsatz des Materials stark eingeschränkt.

Weitere Wege der Herstellung von Sodalith sind beispielsweise durch E. F. Williams et al.: Synthetic photochromic sodalite, Journal of the American Ceramic Society, 52 (1969) 139 - 145 beschrieben. Mittels einer hydrothermalen Synthese können Sodalithe hergestellt werden, deren Schwefelgehalt höchsten 0,62% beträgt und die verschiedenfarbig herstellbar sind. Die angestrebten Farbwirkungen entstehen erst nach einer Wärmebehandlung bei etwa 900°C.

S. Kowalak et al. beschreibt in Sulfur radicalsembedded in various cages of ultramarine analogs prepared from zeolites, Journal of Solid State Chemistry 180 (2007) 1119-1124 die Synthese von Ultramarinanaloga durch thermische Behandlung von Zeolithen A, Erionith und Cancrenite mit elementaren Schwefel und $NaCO_3$ im Temperaturbereich von 500°C bis 800°C. Alle entstehenden Proben waren immer intensiv gefärbt, was auf den Einbau von Schwefel als $\cdot S_2^-$ und $\cdot S_3^-$ Radikale zurückgeführt werden konnte.

Die Herstellung von Sulfid-Alumosilikatsodalith der Form $Ca_8[Al_{12}O_{24}]S_2$ und $Sr_8[Al_{12}O_{24}]S_2$ ist durch Brenchley & Weller (M. E. Brenchley & M. T. Weller: Synthesis and structure of sulfide aluminate sodalithes, Journal of Material Chemistry 2 (1992) 1003 - 1005) beschrieben. Während deren Herstellung werden die Ausgangsstoffe bei 1200°C für 20h erhitzt.

Durch Abscheidung von Hydroxysodalith auf einem keramischen Träger wird dessen Stabilität etwas erhöht (S. Khajavi et al.: "Thermostability of hydroxy sodalite in view of membrane applications", Microporous and Mesoporous Materials 132 (2010) 510 - 517). Eine Alternative stellt die Herstellung eines Natrium- und Aluminium-freien Sodaliths dar (S. Münzer et al.: "Preparation and characterization of sodium-free nanocrystalline sodalite", Microporous and Mesoporous Materials 110 (2008) 3 - 10). Zheng et al.: "Sodalites as ultramicroporous frameworks for hydrogen separation at elevated temperatures: thermal stability, template removal, and hydrogen accessibility", Journal of porous materials 16/3 (2009) 343 - 247) untersuchten derartige Materialien für die adsorptive Wasserstoffspeicherung und bestätigten eine erhöhte thermische Stabilität. Die Synthese Natrium- und Aluminium-freien Sodaliths gelingt jedoch nur unter Zuhilfenahme eines organischen Templatmoleküls. Nach der Synthese muss das Templatmolekül entfernt werden, da es sonst das Porenvolumen des Zeolithes blockieren würde. Auf Grund der geringen Porengröße des Sodaliths kann das Templat nur thermisch entfernt werden. Auch hierbei behindern die kleinen Poren die Templatzersetzung, da das entstehende Kohlendioxid nicht ohne Weiteres durch die Zeolithporen entweichen kann. Dennoch gelingt eine Detemplatisierung durch thermische Behandlung bei > 800°C und über einen Zeitraum von mehreren Tagen. Das Verfahren ist zum einen für eine praktische Anwendung zu teuer, zum anderen findet bei der Detemplatisierung eine Schwindung statt, die zur Zerstörung von Zeolithformkörpern und Schichten führen kann.

Der Erfindung liegt die Aufgabe zugrunde, ein mikroporöses Material mit verbesserter thermischer Stabilität sowie ein Verfahren zur Herstellung eines solchen mikroporösen Materials vorzuschlagen.

Die Aufgabe wird durch Verfahren zur hydrothermalen Synthese eines schwefelhaltigen Alumosilikates in kristalliner Sodalithstruktur unter hydrothermalen

Bedingungen bei Temperaturen in einem Bereich von 60°C bis 150°C gelöst. Bei den Verfahren wird im Laufe der Synthese ein Hydroxisodalith mit zentralen Hydroxidionen gebildet. Die erfindungsgemäßen Verfahren sind in den Ansprüchen 1 bis 3 angegeben.

Dabei erfolgt die hydrothermale Synthese des schwefelhaltigen Alumosilikates in kristalliner Sodalithstruktur ohne die Verwendung eines Templates.
Bei der hydrothermalen Synthese werden die zentralen Hydroxidionen mindestens teilweise durch $S^{2-}$-Anionen ersetzt, so dass ein Schwefelsodalith erhalten wird, der bis zu 800 °C in trockener Atmosphäre und bis zu 300 °C in wassergesättigter Atmosphäre stabil ist und seine Kristallinität behält.

Das Wesen der Erfindung besteht darin, dass das zentrale Hydroxidion des Hydroxysodalith bei der hydrothermalen Synthese durch ein alternatives Anion ersetzt wird. Durch die Zugabe eines Sulfides, wie z. B. $Na_2S$, in die templatfreie Hydroxysodalithsynthese kann kristalliner Sodalith präpariert werden, dessen zentrales Anion vollständig oder teilweise durch $S^{2-}$ besetzt ist (Schwefelsodalith).

Überraschender Weise zeigte sich bei der Bestimmung der thermischen und hydrothermalen Stabilität, dass das so gewonnene Material weder bei 800°C in trockener Atmosphäre noch bei 300°C in wassergesättigter Atmosphäre seine Kristallinität verlor. Trotz der Anwesenheit von $S^{2-}$ in der Porenstruktur weist das Material eine hinreichende Porosität auf, was durch Hochdruckadsorptionsmessungen mit Wasserstoff nachgewiesen werden konnte.

Vorteil der vorliegenden Erfindung ist es, dass über einen einfachen Syntheseweg bei geringem Druck und geringen Temperaturen ein thermisch und hydrothermal stabiles mikroporöses Material in Form eines Alumosilikats (Zeolith) herstellbar ist. Aufgrund seiner in der Kristallstruktur vorhandenen Poren mit einem Durchmesser von < 0,3 nm ist es mittels des mikroporösen Materials möglich, kleine Gasmoleküle wie Wasserstoff, Helium und Wasser selektiv aus Gasgemischen durch Porenadsorption bzw. Adsorption und Permeation bei erhöhter Temperatur sowie bei Anwesenheit von Wasser abzutrennen.

Wird während der hydrothermalen Synthese gemäß dem erfindungsgemäßen Verfahren Natrium-Aluminium-Sulfo-Silikat (Ultramarinblau) zugesetzt, erhält man ein schwefelhaltiges Alumosilikat mit einer hell blau-grünlichen Färbung. Ohne einen Zusatz von Natrium-Aluminium-Sulfo-Silikat wird ein schwefelhaltiges Alumosilikat mit einer weißen Färbung erhalten.

Das erfindungsgemäße Verfahren kann auch unter Nutzung von Kristallisationskeimen durchgeführt werden. Beispielsweise kann zur Herstellung dünner, geschlossener Membranschichten zunächst eine Beschichtung der porösen keramischen Träger (Trägerkeramik) mit zu Schlicker verarbeiteten Hydroxysodalithpulvern oder Schwefelsodalithpulvern erfolgen. Die aufgebrachten Kristalle dienen als Wachstumskeime bei einer anschließenden hydrothermalen Synthese des Schwefelsodaliths unter hydrothermalen Bedingungen entsprechend dem erfindungsgemäßen Verfahren.

Die Aufgabe wird ferner durch ein schwefelhaltiges Alumosilikat in kristalliner Sodalithstruktur in Form eines Sodalith's mit zentralen Anionen gelöst, das dadurch gekennzeichnet ist, dass das schwefelhaltige Alumosilikat eine molaren Zusammensetzung enthaltend 13 % - 14 % Silizium, 13 % - 14% Aluminium, 15 % - 16 % Natrium, 55% - 56% Sauerstoff und 2,5% - 3% Schwefel aufweist, die zentralen Anionen des schwefelhaltigen Alumosilikats mindestens teilweise $S^{2-}$- Anionen sind und das schwefelhaltige Alumosilikat als Schwefelsodalith vorliegt, dass das schwefelhaltige Alumosilikat einen mittleren Porendurchmesser von < 0,3 nm aufweist und dass das schwefelhaltige Alumosilikat bis 800 °C in trockener Atmosphäre und bis 300 °C in wassergesättigter Atmosphäre stabil ist und seine Kristallinität behält.

Aus dem erfindungsgemäßen schwefelhaltigen Alumosilikat können Formkörper oder dünne, geschlossene Membranschichten auf porösen, keramischen Trägern hergestellt werden. Die Formkörper können zusätzlich organische und / oder anorganische Hilfsstoffe enthalten. Dabei ist es günstig, dass das erfindungsgemäße schwefelhaltige Alumosilikat als Pulver bereitgestellt werden kann.

Werden aus dem erfindungsgemäßen Material Formkörper hergestellt, kann das schwefelhaltige Alumosilikat mit einer anorganischen Binderphase, wie Silica oder Tonmineralien, verformt und durch Sinterung verfestigt werden. Eine Erhöhung des Schwefelsodalithanteiles kann durch nachträgliche hydrothermale Behandlung erfolgen, bei der ein Teil der anorganischen Binderphase in Schwefelsodalith umgewandelt wird.

Das erfindungsgemäße schwefelhaltige Alumosilikat kann auch zur Herstellung von Schichten auf Trägermaterialien verwendet werden. Die Schichten können beispielsweise mittels eines der Verfahren Schlickergießen, Auffiltrieren, Anheften mit oberflächenmodifizierenden Substanzen oder hydrothermaler Kristallisation auf den Trägermaterialien aufgebracht werden.

Zur Herstellung dünner, geschlossener Membranschichten erfolgt zunächst eine Beschichtung der Trägerkeramik mit zu Schlicker verarbeiteten Hydroxysodalithpulvern oder Schwefelsodalith-Pulvern. Die aufgebrachten Kristalle dienen dann, wie schon oben ausgeführt, als Wachstumskeim bei einer anschließenden Synthese des Schwefelsodaliths unter hydrothermalen Bedingungen.

Das erfindungsgemäß hergestellte Alumosilikat weist außergewöhnlich hohe thermische und hydrothermale Stabilität auf. Aufgrund der Stabilität und der sehr günstigen Porengröße von weniger als 0,3 nm gestattet das erfindungsgemäße schwefelhaltige Alumosilikat erstmalig die Abtrennung von Wasserstoff oder Helium aus wasserfreien Gasgemischen durch Adsorption oder Membrantrennung mit porösen Materialien bei Temperaturen bis 800°C sowie die Abtrennung von Wasserstoff, Helium und Wasser bei Temperaturen bis mindestens 300°C. Membranen und Adsorber können zur Gleichgewichtsverschiebung in chemischen Synthesen durch Abtrennung oder Zudosierung einer Komponente unter Synthesebedingungen eingesetzt werden, wie z. B. bei der Synthesegasherstellung oder der Fischer-Tropsch-Synthese, was zu erheblichen Ausbeuteerhöhungen führen würde.

Die Erfindung soll nachstehend anhand von Ausführungsbeispielen näher erläutert werden. Dabei werden in den Ausführungsbeispielen 1 bis 3 mögliche Wege zur Herstellung des erfindungsgemäßen schwefelhaltigen Alumosilikats beschrieben. Die Ausführungsbeispiele 4 bis 6 zeigen die Behandlung des erfindungsgemäßen schwefelhaltigen Alumosilikats unter thermischen und hydrothermalen Bedingungen auf. Die Ausführungsbeispiele 7 und 8 dienen jeweils der Illustration der Erzeugung dünner, geschlossener Membranschichten auf Trägerkeramiken. In den Ausführungsbeispielen 9 und 10 sind Möglichkeiten der Gewinnung von Formkörpern aus dem erfindungsgemäßen schwefelhaltigen Alumosilikat beschrieben.

Ausführungsbeispiel 1

Es werden drei Lösungen hergestellt. In einem ersten Erlenmayerkolben werden 6,5 g (0,03 mol, 0,6 Mol%) Natriumsilikat-Pentahydrat und 30 g (0,75 mol, 16,1 Mol%) Natriumhydroxid in 70 g (3,89 mol, 83,3 Mol%) Wasser gelöst und so eine Lösung 1 (erste Lösung) hergestellt. Zur Herstellung einer Lösung 2 (zweite Lösung) werden einem zweiten Erlenmayerkolben 2,5 g (0,03 mol, 0,6 Mol%) Natriumaluminat und 33,5 g (0,85 mol, 17,8 Mol%) Natriumhydroxid in 70 g (3,89 mol, 81,6 Mol%) Wasser gelöst. Eine Lösung 3 (dritte Lösung) wird durch ein Lösen von 55 g (0,23 mol, 4,4 Mol%) Natriumsulfid-Nonahydrat in 90 g (5 mol, 95,6 Mol%) Wasser in einem dritten Erlenmayerkolben hergestellt. Alle drei Lösungen 1, 2 und 3 werden gerührt, bis sie klar sind. Danach werden die Lösungen 2 und 3 langsam und unter ständigem, langsamen Rühren in die Lösung 1 gegeben, wobei die Massenverhältnisse drei Teile der Lösung 1, drei Teile der Lösung 2 und vier Teile der Lösung 3 eingehalten werden. Dabei färbt sich die Mischung (vereinigte Lösung) der drei Lösungen 1, 2 und 3 orange. Anschließend wird die vereinigte Lösung in einen Autoklav mit Teflonliner überführt und nach dem druckdichten Verschließen 20 h bei 80 °C wärmebehandelt. Der Autoklav wird im Wasserbad abgekühlt. Ein gebildeter weißer Niederschlag wird mittels Filtration abgetrennt, mit viel Wasser pH-neutral gewaschen und getrocknet. Durch Röntgendiffraktometrie konnte der alleinige Phasenbestand des erhaltenen Pulvers aus Sodalith nachgewiesen werden.

Ausführungsbeispiel 2

Es wird eine Lösung 1 (erste Lösung) und eine Lösung 2 (zweite Lösung) hergestellt. Für die Lösung 1 werden 6,1 g (0,075 mol, 3,6 Mol%) Natriumaluminat und 1,6 g (0,04 mol, 2,1 Mol%) Natriumhydroxid in 35 g (1,94 mol, 94,3 Mol%) Wasser gelöst. Lösung 2 wird durch Einrühren von 12 g (0,05 mol, 9,1 Mol%) Natriumsulfid-Nonahydrat in 9 g (0,5 mol, 90,9 Mol%) Wasser hergestellt. Beide Lösungen 1 und 2 werden jeweils 30 min gerührt. Anschließend wird Lösung 1 in Lösung 2 gegeben, wobei die Lösung 1 und die Lösung 2 im Masseverhältnis von zwei Teilen Lösung 1 und ein Teil Lösung 2 in einer Mischung zusammengeführt werden. Nach 15 min Rühren bei Raumtemperatur werden langsam unter ständigem Rühren 11,3 g (0,075 mol, 2,8 Mol%, bezogen auf die vorliegende Mischung) 40%iges Kiesel-Sol zugetropft. Dabei bildet sich ein Gel. Das Gel wird weitere 30 min gerührt und anschließend in einem in einen Autoklav mit Teflonliner überführt und nach dem druckdichten Verschließen 20 h bei 120 °C wärmebehandelt. Der Autoklav wird im Wasserbad abgekühlt. Ein gebildeter weißer Niederschlag wird mittels Filtration abgetrennt, mit viel Wasser pH-neutral gewaschen und getrocknet. Durch Röntgendiffraktometrie konnte der alleinige Phasenbestand des so erhaltenen Pulvers aus Sodalith nachgewiesen werden.

Ausführungsbeispiel 3

Es werden 1,84 Mol% Natriumsulfid-Nonahydrat in 92,58 Mol% Wasser gelöst. Die Lösung wird bei Raumtemperatur gerührt bis alle Kristalle gelöst sind Anschließend werden der Lösung 2,78 Mol% Natriumsilikat-Pentahydrat zugegeben. Unter ständigem Rühren werden zunächst nach 30 Minuten 2,78 Mol% Natriumaluminat und nach einer weiteren Stunde 0,02 Mol% Natrium-Aluminium-Sulfo-Silikat (Ultramarin) zugegeben. Nach einer weiteren Stunde Rühren bei Raumtemperatur wird die Suspension in einen Autoklav gegeben wird und 20 Stunden bei 80°C wärmebehandelt. Danach wird der Autoklav im Wasserbad abgekühlt. Ein sich gebildeter Niederschlag wird mittels Filtration abgetrennt, mit Wasser pH-neutral gewaschen und getrocknet.

Ausführungsbeispiel 4

20 g des gemäß Ausführungsbeispiel 1 oder 2 hergestellten Pulvers werden in einen Platintiegel gegeben und in einem Muffelofen deponiert. Der Ofen wird innerhalb von 8 Stunden auf 800°C aufgeheizt, bei dieser Zieltemperatur für 48 Stunden gehalten und dann frei abgekühlt. Eine anschließend entnommene Probe des gebrannten Pulvers wurde mittels Röntgendiffraktometrie untersucht. Es wurde ausschließlich Sodalith als kristalliner Bestandteil des gebrannten Pulvers gefunden.

Ausführungsbeispiel 5

20 g des gemäß Ausführungsbeispiel 1 oder 2 hergestellten Pulvers werden in einen Platintiegel gefüllt und anschließend in einen Rohrofen gegeben. Der Rohrofen wird kontinuierlich mit $N_2$ gespült, welches zuvor in einer mit Wasser gefüllten Flasche mit Wasser gesättigt wurde (2,5 Vol% $H_2O$). Der Rohrofen wird innerhalb von 8 Stunden auf 800°C aufgeheizt und nach 48 Stunden Haltedauer bei dieser Zieltemperatur wieder frei abgekühlt. Eine anschließend entnommene Probe des gebrannten Pulvers wurde mittels Röntgendiffraktometrie untersucht. Es wurde ausschließlich Sodalith als kristalliner Bestandteil des gebrannten Pulvers gefunden.

Ausführungsbeispiel 6

Ein verschließbares, druckfestes Gefäß (Autoklav) mit einem Innenvolumen von 1.000 ml wird mit 300 ml Wasser befüllt. 20 g des gemäß Ausführungsbeispiel 3 hergestellten Pulvers wird in einen Silbertiegel gegeben und im Gasraum oberhalb des eingefüllten Wassers im Autoklav installiert. Der Autoklav wird nach dem Verschließen innerhalb von 12 Stunden auf 300°C aufgeheizt und dann nach weiteren 12 Stunden Haltedauer bei dieser Zieltemperatur frei abgekühlt. Nach dieser Behandlung wird eine Probe des Pulvers mittels Röntgendiffraktometrie untersucht. Es wurde nach der hydrothermalen Behandlung Sodalith und geringe Anteile eines hexagonalen, schwefelhaltigen Alumosilikates des identischen Phasenbestands gefunden.

Die Ausführungsbeispiele 4 bis 6 wurden ausgeführt, um zu zeigen, dass die nach Ausführungsbeispiel 1, 2 oder 3 hergestellten schwefelhaltigen Alumosilikate nach einer thermischen oder hydrothermalen Behandlung ihre Struktur nicht verändert hatten.

Ausführungsbeispiel 7

Asymmetrisch strukturierte, poröse keramische Einkanalrohre aus $\alpha$-$Al_2O_3$ mit einer finalen Trägerschicht mit einem Porendurchmesser von 100 nm werden zur Bekeimung mit einem Schlicker beschichtet. Der Schlicker wurde durch Aufmahlen eines der gemäß Ausführungsbeispiel 1 oder 2 hergestellten Pulver in Wasser und Mischen mit organischen Bindern, wie Polyethylenglycol und mit anorganischen Bindern, wie Kieselsol hergestellt. Die mit dem Schlicker beschichteten Einkanalrohre wurden bei 450°C gebrannt.

Ferner werden drei Lösungen gemäß Ausführungsbeispiel 1 hergestellt und wie beschrieben zu einer Mischung vereinigt, die als Reaktionslösung dient. Die bekeimten Einkanalrohre werden mit Teflonband umwickelt und mit Hilfe einer Teflonhalterung in einen Autoklav mit Teflonliner senkrecht eingebaut. Anschließend wird die Reaktionslösung dazu gegeben. Die Synthese erfolgt 20 h bei 80°C. Anschließend wird der Autoklav im Wasserbad abgekühlt. Die Einkanalrohre werden entnommen, mit viel Wasser pH-neutral gewaschen und getrocknet.

Ausführungsbeispiel 8

Membranen auf Einkanalrohren werden wie in Ausführungsbeispiel 7 beschrieben hergestellt. Allerdings wird zur Bekeimung der Einkanalrohre statt eines Schwefelsodalitpulvers ein Hydroxysodalithpulver verwendet.

Ausführungsbeispiel 9

Es werden 10 g eines gemäß einem der Ausführungsbeispiele 1, 2 oder 3 hergestellten Pulvers mit 1 g Stearinsäure und 5 g Pyrogen Kieselsäure (Aerosil 200, Evonic) gemischt und zu Tabletten verpresst. Die Tabletten werden bei 450°C gebrannt. Anschließend erfolgt eine hydrothermale Behandlung, wie diese in Ausführungsbeispiel 1 beschrieben ist. Anschließend an die hydrothermale Behandlung wird die Tablette gewaschen und getrocknet.

Ausführungsbeispiel 10

Es werden 500 g eines gemäß einem der Ausführungsbeispiele 1 oder 2 hergestellten Pulvers mit 200 g Kieselsol, 100g Bentonit und 20g Glyzerin gemischt, geknetet und durch Extrusion zu Strangmaterial verformt, das in 10 mm bis 200 mm lange Stücken geschnitten wird. Die Stücken werden über mehrere Tage bei Raumtemperatur getrocknet und dann schrittweise mit je einer Stunde Haltezeit bei 60°C, 120°C, 400°C und 600°C thermisch behandelt. Anschließend erfolgt eine hydrothermale Behandlung wie in Ausführungsbeispiel 1 beschrieben. Als Produkt wird ein Formkörper erhalten.

**Patentansprüche**

1. Verfahren zur hydrothermalen Synthese eines schwefelhaltigen Alumosilikates in kristalliner Sodalithstruktur unter hydrothermalen Bedingungen bei Temperaturen in einem Bereich von 60°C bis 150°C, bei dem im Laufe der Synthese ein Hydroxisodalith mit zentralen Hydroxidionen gebildet wird, **dadurch gekennzeichnet, dass**

    - eine erste Lösung hergestellt wird, indem 0,6 Mol% Natriumsilikat-Pentahydrat und 16,1 Mol% Natriumhydroxid in 83,3 Mol% Wasser gelöst werden,
    - eine zweite Lösung durch Einrühren von 0,6 Mol% Natriumaluminat und 17,8 Mol% Natriumhydroxid in 81,6 Mol% Wasser hergestellt wird,
    - eine dritte Lösung durch Einrühren von 4,4 Mol% Natriumsulfid-Nonahydrat in 95,6 Mol% Wasser hergestellt wird,
    - alle Lösungen gerührt werden, bis diese vollständig klar sind,
    - die zweite Lösung und die dritte Lösung unter langsamen Rühren in die erste Lösung gegeben werden, wobei die Massenverhältnisse drei Teile der ersten Lösung, drei Teile der zweiten Lösung und vier Teile der dritten Lösung eingehalten werden,
    - die vereinigte Lösung in einen Autoklav gegeben und 20 Stunden bei 80°C wärmebehandelt wird,
    - der Autoklav im Wasserbad abgekühlt wird,
    - ein sich gebildeter weißer Niederschlag mittels Filtration abgetrennt, mit Wasser pH-neutral gewaschen und getrocknet wird.

2. Verfahren zur hydrothermalen Synthese eines schwefelhaltigen Alumosilikates in kristalliner Sodalithstruktur unter hydrothermalen Bedingungen bei Temperaturen in einem Bereich von 60°C bis 150°C, bei dem im Laufe der Synthese ein Hydroxisodalith mit zentralen Hydroxidionen gebildet wird, **dadurch gekennzeichnet, dass**

    - eine erste Lösung hergestellt wird, indem 3,6 Mol% Natriumaluminat und 2,1 Mol% Natriumhydroxid in 94,3 Mol% Wasser gelöst werden,
    - eine zweite Lösung durch Einrühren von 9,1 Mol% Natriumsulfid-Nonahydrat in 90,9 Mol% Wasser hergestellt wird,
    - die erste Lösung und die zweite Lösung jeweils 30 min gerührt werden,
    - die erste Lösung und die zweite Lösung im Masseverhältnis von zwei Teile erste Lösung und ein Teil zweite Lösung in einer Mischung zusammengeführt werden,
    - nach 15-minütigem Rühren der Mischung bei Raumtemperatur unter ständigem Rühren bezogen auf die vorliegende Mischung 2,8 Mol% 40%-iges Kiesel-Sol zugetropft wird, wodurch aus der Mischung ein Gel gebildet wird,
    - das Gel weitere 30 Minuten gerührt wird,
    - das Gel in einen Autoklav gegeben und 20 Stunden bei 120°C wärmebehandelt wird,
    - der Autoklav im Wasserbad abgekühlt wird,
    - ein sich gebildeter weißer Niederschlag mittels Filtration abgetrennt, mit Wasser pH-neutral gewaschen und getrocknet wird.

3. Verfahren zur hydrothermalen Synthese eines schwefelhaltigen Alumosilikates in kristalliner Sodalithstruktur unter hydrothermalen Bedingungen bei Temperaturen in einem Bereich von 60°C bis 150°C, bei dem im Laufe der Synthese ein Hydroxisodalith mit zentralen Hydroxidionen gebildet wird, **dadurch gekennzeichnet, dass**

    - 1,84 Mol% Natriumsulfid-Nonahydrat in 92,58 Mol% Wasser gelöst werden,
    - die Lösung bei Raumtemperatur gerührt wird bis alle Kristalle gelöst sind,
    - der Lösung 2,78 Mol% Natriumsilikat-Pentahydrat zugegeben werden,
    - unter ständigem Rühren zunächst nach 30 Minuten 2,78 Mol% Natriumaluminat und nach einer weiteren Stunde 0,02 Mol% Natrium-Aluminium-Sulfo-Silikat (Ultramarin) zugegeben werden,
    - nach einer weiteren Stunde Rühren bei Raumtemperatur die Suspension in einen Autoklav gegeben wird und 20 Stunden bei 80°C wärmebehandelt wird,
    - der Autoklav im Wasserbad abgekühlt wird,
    - ein sich gebildeter Niederschlag mittels Filtration abgetrennt, mit Wasser pH-neutral gewaschen und getrocknet wird.

4. Schwefelhaltiges Alumosilikat in kristalliner Sodalithstruktur in Form eines Sodalith's mit zentralen Anionen, **dadurch gekennzeichnet, dass**

    - das schwefelhaltige Alumosilikat eine molaren Zusammensetzung enthaltend 13% - 14% Silizium, 13% - 14% Aluminium, 15% - 16 % Natrium, 55 % - 56% Sauerstoff und 2,5% - 3 % Schwefel aufweist,
    - die zentralen Anionen des schwefelhaltigen Alumosilikats mindestens teilweise $S^{2-}$ -Anio-nen sind und das schwefelhaltige Alumosilikat als Schwefelsodalith vorliegt,
    - dass schwefelhaltige Alumosilikat einen mittleren Porendurchmesser von < 0,3 nm aufweist und
    - dass das schwefelhaltige Alumosilikat bis 800 °C in trockener Atmosphäre und bis 300 °C in wassergesättigter Atmosphäre stabil ist und seine Kristallinität behält.

5. Formkörper beinhaltend das schwefelhaltige Alumosilikat gemäß Anspruch 4.

6. Formkörper nach Anspruch 5, **dadurch gekennzeichnet, dass** der Formkörper zusätzliche organische und / oder anorganische Hilfsstoffe enthält.

7. Verwendung des schwefelhaltigen Alumosilikats gemäß Anspruch 4 zur Herstellung von Schichten auf Trägermaterialien.

8. Verfahren gemäß Anspruch 7, **dadurch gekennzeichnet, dass** die Schichten mittels eines der Verfahren Schlickergießen, Auffiltrieren, Anheften mit oberflächenmodifizierenden Substanzen oder hydrothermaler Kristallisation auf den Trägermaterialien aufgebracht werden.

**Claims**

1. Method for hydrothermal synthesis of a sulfur-containing aluminosilicate with a crystalline sodalite structure under hydrothermal conditions at temperatures in the range from 60 °C to 150 °C, in which a hydroxy sodalite with central hydroxide ions is formed in the course of the synthesis, **characterized in that**

   - a first solution is produced by dissolving 0.6 mol% sodium silicate pentahydrate and 16.1 mol% sodium hydroxide in 83.3 mol% water,
   - a second solution is produced by stirring 0.6 mol% sodium aluminate and 17.8 mol% sodium hydroxide into 81.6 mol% water,
   - a third solution is produced by stirring 4.4 mol% sodium sulphide nonahydrate into 95.6 mol% water,
   - all solutions are stirred, until they are completely clear,
   - the second solution and the third solution are added to the first solution while stirring slowly, wherein the mass ratios of three parts the first solution, three parts the second solution and four parts the third solution are maintained,
   - the unified solution is added to an autoclave and heat-treated for 20 hours at 80 °C,
   - the autoclave is cooled down in a water bath,
   - a white precipitate that has formed is separated by filtration, washed by water in a pH-neutral manner and dried.

2. Method for hydrothermal synthesis of a sulfur-containing aluminosilicate with a crystalline sodalite structure under hydrothermal conditions at temperatures in the range from 60 °C to 150 °C, in which a hydroxy sodalite with central hydroxide ions is formed in the course of the synthesis, **characterized in that**

   - a first solution is produced by dissolving 3.6 mol% sodium aluminate and 2.1 mol% sodium hydroxide in 94.3 mol% water,
   - a second solution is produced by stirring 9.1 mol% sodium sulphide nonahydrate into 90.9 mol% water,
   - the first solution and the second solution are each stirred for 30 minutes,
   - the first solution and the second solution are added together in a mixture in a mass ratio of two parts the first solution and one part the second solution,
   - after stirring the mixture for 15 minutes at ambient temperature 2.8 mol% 40% silica sol is added in drops with respect to the present mixture while stirring continuously, thereby forming a gel from the mixture,
   - the gel is stirred for another 30 minutes,
   - the gel is added to an autoclave and heat-treated for 20 hours at 120 °C,
   - the autoclave is cooled down in a water bath,
   - a white precipitate that has formed is separated by filtration, washed by water in a pH-neutral manner and dried.

3. Method for hydrothermal synthesis of a sulfur-containing aluminosilicate with a crystalline sodalite structure under hydrothermal conditions at temperatures in the range from 60 °C to 150 °C, in which a hydroxy sodalite with central hydroxide ions is formed in the course of the synthesis, **characterized in that**

   - 1.84 mol% sodium sulphide nonahydrate are dissolved in 92.58 mol% water,
   - the solution is stirred at ambient temperature, until all crystals are dissolved,
   - 2.78 mol% sodium silicate pentahydrate are added to the solution,
   - while stirring continuously first 2.78 mol% sodium aluminate are added after 30 minutes and then 0.02 mol% sodium aluminium sulfosilicate (ultramarine) are added after another hour,
   - after stirring for another hour at ambient temperature the suspension is added to an autoclave and is heat-treated for 20 hours at 80 °C,
   - the autoclave is cooled down in a water bath,
   - a white precipitate that has formed is separated by filtration, washed by water in a pH-neutral manner and dried.

4. Sulfur-containing aluminosilicate with a crystalline sodalite structure in the form of a sodalite with central anions, **characterized in that**

- the sulfur-containing aluminosilicate has a molar composition containing 13 % - 14 % silicon, 13 % - 14 % aluminium, 15 % - 16 % sodium, 55 % - 56 % oxygen and 2.5 % - 3 % sulphur,
- the central anions of the sulfur-containing aluminosilicate are at least partially $S^{2-}$ anions and the sulfur-containing aluminosilicate is present as a sulphur sodalite,
- the sulfur-containing aluminosilicate has an average pore diameter of < 0.3 nm and
- the sulfur-containing aluminosilicate is stable and maintains its crystallinity up to 800 °C in dry atmosphere and up to 300 °C in water-saturated atmosphere.

5. Moulded body containing the sulfur-containing aluminosilicate according to claim 4.

6. Moulded body according to claim 5, **characterized in that** the moulded body contains additional organic and / or inorganic auxiliary substances.

7. Use of the sulfur-containing aluminosilicate according to claim 4 for producing layers on carrier materials.

8. Method according to claim 7, **characterized in that** the layers are applied to the carrier materials by means of one of the methods of slip-casting, filtration onto the carrier materials, adhesion with surface-modifying substances or hydrothermal crystallization.

**Revendications**

1. Procédé pour la synthèse hydrothermale d'un aluminosilicate contenant du soufre avec une structure cristalline de sodalite dans des conditions hydrothermales à des températures dans la plage de 60 °C à 150 °C, dans lequel une sodalite hydroxy avec des ions hydroxyde centraux est formée au cours de la synthèse, **caractérisé en ce que**

    - une première solution est produite en dissolvant 0,6 mol% de silicate de sodium pentahydrate et 16,1 mol% d'hydroxyde de sodium dans 83,3 mol% d'eau,
    - une deuxième solution est produite en délayant 0,6 mol% d'aluminate de sodium et 17,8 mol% d'hydroxyde de sodium dans 81,6 mol% d'eau,
    - une troisième solution est produite en délayant 4,4 mol% de sulfure de sodium nonahydrate dans 95,6 mol% d'eau,
    - toutes les solutions sont remuées jusqu'à ce qu'elles soient complètement claires,
    - la deuxième solution et la troisième solution sont ajoutées à la première solution en remuant lentement, les rapports de masse de trois parties la première solution, trois parties la deuxième solution et quatre parties la troisième solution étant maintenus,
    - la solution unifiée est ajoutée à un autoclave et traitée thermiquement pour 20 heures à 80 °C,
    - l'autoclave est refroidi dans un bain d'eau,
    - un précipité blanc qui s'est formé est séparé par filtration, lavé avec de l'eau d'une manière pH neutre et séché.

2. Procédé pour la synthèse hydrothermale d'un aluminosilicate contenant du soufre avec une structure cristalline de sodalite dans des conditions hydrothermales à des températures dans la plage de 60 °C à 150 °C, dans lequel une sodalite hydroxy avec des ions hydroxyde centraux est formée au cours de la synthèse, **caractérisé en ce que**

    - une première solution est produite en dissolvant 3,6 mol% d'aluminate de sodium et 2,1 mol% d'hydroxyde de sodium dans 94,3 mol% d'eau,
    - une deuxième solution est produite en délayant 9,1 mol% de sulfure de sodium nonahydrate dans 90,9 mol% d'eau,
    - la première solution et la deuxième solution sont remuées chacune pour 30 minutes,
    - la première solution et la deuxième solution sont unifiées dans un mélange dans un rapport de masse de deux parties la première solution et une partie la deuxième solution,
    - après remuant le mélange pour 15 minutes à une température ambiante 2,8 mol% de 40% de sol de silice est ajouté goutte à goutte par rapport au mélange présent en remuant constamment, ainsi formant un gel à partir du mélange,
    - le gel est remué pour 30 minutes plus encore,
    - le gel est ajouté à un autoclave et traité thermiquement pour 20 heures à 120 °C,
    - l'autoclave est refroidi dans un bain d'eau,
    - un précipité blanc qui s'est formé est séparé par filtration, lavé avec de l'eau d'une manière pH neutre et séché.

3. Procédé pour la synthèse hydrothermale d'un aluminosilicate contenant du soufre avec une structure cristalline de sodalite dans des conditions hydrothermales à des températures dans la plage de 60 °C à 150 °C, dans lequel une sodalite hydroxy avec des ions hydroxyde centraux est formée au cours de la synthèse, **caractérisé en ce que**

    - 1,84 mol% de sulfure de sodium nonahydrate est dissous dans 92,58 mol% d'eau,
    - la solution est remuée à une température ambiante, jusqu'à ce que tous les cristaux soient dissous,

- 2,78 mol% de silicate de sodium pentahydrate sont ajoutés à la solution,
- en remuant constamment premièrement 2,78 mol% d'aluminate de sodium sont ajoutés après 30 minutes et puis 0,02 mol% de sulfosilicate sodium aluminium (ultramarin) sont ajoutés après une heure plus encore,
- après remuant pour une heure plus encore à une température ambiante la suspension est ajoutée à un autoclave et traitée thermiquement pour 20 heures à 80 °C,
- l'autoclave est refroidi dans un bain d'eau,
- un précipité blanc qui s'est formé est séparé par filtration, lavé avec de l'eau d'une manière pH neutre et séché.

4. Aluminosilicate contenant du soufre avec une structure cristalline de sodalite sous la forme d'une sodalite avec des anions centraux, **caractérisé en ce que**

- l'aluminosilicate contenant du soufre a une composition molaire contenant 13 % - 14 % de silice, 13 % - 14 % d'aluminium, 15 % - 16 % de sodium, 55 % - 56 % d'oxygène et 2,5 % - 3 % de sulfure,
- les anions centraux de l'aluminosilicate contenant du soufre sont au moins partiellement des anions $S^{2-}$ et l'aluminosilicate contenant du soufre est présent en tant que sodalite de sulfure,
- l'aluminosilicate contenant du soufre a un diamètre de pore moyen de < 0,3 nm et
- l'aluminosilicate contenant du soufre est stable et maintient sa cristallinité jusqu'a 800 °C en atmosphère sèche et jusqu'à 300 °C en atmosphère saturée d'eau.

5. Corps moulé contenant l'aluminosilicate contenant du soufre selon la revendication 4.

6. Corps moulé selon la revendication 5, **caractérisé en ce que** le corps moulé contient des substances auxiliaires organiques et / ou inorganiques supplémentaires.

7. Utilisation de l'aluminosilicate contenant du soufre selon la revendication 4 pour produire des couches sur des matériaux de support.

8. Procédé selon la revendication 7, **caractérisé en ce que** les couches sont appliquées aux matériaux de support au moyen d'un des procédés de coulage en barbotine, filtration sur les matériaux de support, adhésion avec des substances modifiant la surface ou cristallisation hydrothermale.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **X. XU et al.** Microwave-assisted hydrothermal synthesis of hydroxy-sodalite zeolite membrane. *Microporous and Mesoporous Materials,* 2004, vol. 75, 173-181
- **S. KHAJAVI et al.** Synthesis of thin defect-free hydroxy sodalite membranes: New candidate for activated water permeation. *Journal of Membrane Science,* 2007, vol. 299, 63-72
- Performance of hydroxy sodalite membranes as absolute water selective materials under acidic and basic conditions. *Journal of Membrane Science,* 2010, vol. 356, 1-6
- Fischer-Tropsch synthesis with in situ H2O removal - Directions of membrane development. *Microporous and Mesoporous Materials,* 2008, vol. 115, 123-136
- **E. F. WILLIAMS et al.** Synthetic photochromic sodalite. *Journal of the American Ceramic Society,* 1969, vol. 52, 139-145

- **S. KOWALAK et al.** Sulfur radicalsembedded in various cages of ultramarine analogs prepared from zeolites. *Journal of Solid State Chemistry,* 2007, vol. 180, 1119-1124
- **M. E. BRENCHLEY ; M. T. WELLER.** Synthesis and structure of sulfide aluminate sodalithes. *Journal of Material Chemistry,* 1992, vol. 2, 1003-1005
- **S. KHAJAVI et al.** Thermostability of hydroxy sodalite in view of membrane applications. *Microporous and Mesoporous Materials,* 2010, vol. 132, 510-517
- **S. MÜNZER et al.** Preparation and characterization of sodium-free nanocrystalline sodalite. *Microporous and Mesoporous Materials,* 2008, vol. 110, 3-10
- **ZHENG et al.** Sodalites as ultramicroporous frameworks for hydrogen separation at elevated temperatures: thermal stability, template removal, and hydrogen accessibility. *Journal of porous materials,* 2009, vol. 16 (3), 343-247